# FASCICULE DE BREVET EUROPEEN

(11) **EP 3 619 055 B1**
(45) Date de publication et mention de la délivrance du brevet: **31.03.2021**
(21) Numéro de dépôt: 18724971.9
(22) Date de dépôt: 25.04.2018
(51) Int. Cl.: B60C 9/00, B60C 9/04, B60C 9/20

(54) **PNEUMATIQUE POUR VÉHICULE**
FAHRZEUGREIFEN
TYRE FOR VEHICLE

(30) Priorité: 05.05.2017 FR 1753975
(43) Date de publication de la demande: 11.03.2020
(73) Titulaire: COMPAGNIE GENERALE DES ETABLISSEMENTS MICHELIN, 63000 Clermont-Ferrand (FR)
(72) Inventeur: HOTTEBART, François, 63040 Clermont-Ferrand Cedex 9 (FR); DEROBERT-MAZURE, Jean-Charles, 63040 Clermont-Ferrand Cedex 9 (FR); ANDRE, Guillaume, 63040 Clermont-Ferrand Cedex 9 (FR); MAUGER, Antoine, 63040 Clermont-Ferrand Cedex 9 (FR); FILIOL, Eve-Anne, 63040 Clermont-Ferrand Cedex 9 (FR)
(74) Mandataire: Desbordes, Guillaume
(86) Numéro de dépôt international: PCT/FR2018/051040
(87) Numéro de publication internationale: WO 2018/202982

(56) Documents cités:
- FR-A1- 3 008 998
- FR-A1- 3 032 149
- FR-A1- 3 041 568

## Description

La présente invention concerne un pneumatique pour véhicule.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail. Les éléments de renforcement de la au moins une couche de carcasse sont dimensionnés usuellement en fonction de la pression d'éclatement du pneumatique.

### ETAT DE LA TECHNIQUE

Dans le contexte actuel de développement durable, l'économie de ressources et donc de matières premières est un des objectifs majeurs des industriels. Pour les pneumatiques de véhicule de tourisme, une des voies de recherche pour cet objectif, consiste à diminuer la masse et donc la résistance à rupture des câbles métalliques habituellement utilisés comme éléments de renforcement de différentes couches de l'armature de sommet. Cette démarche peut conduire à remplacer ces câbles métalliques par des fils unitaires ou monofilaments tels que décrits dans le document EP 0043563 dans lequel ce type d'éléments de renforcement est utilisé dans un double objectif de gain de masse et de résistance au roulement.

De même, les architectures de pneumatiques dont l'armature de carcasse est composée d'une unique couche de carcasse sont plus intéressantes d'un point de vue de l'économie de matière que les architectures dont l'armature de carcasse comporte au moins deux couches de carcasse.

Ainsi les gains de matières premières amènent à concevoir des pneumatiques tels que les couches de travail aient une résistance à la rupture de plus en plus faible. Cette modification des couches de sommet n'exige pas en principe de modification de la couche de carcasse pour une même dimension et une même pression.

Cependant l'utilisation de ce type d'éléments de renforcement dans les couches de sommet présente l'inconvénient d'entraîner la baisse de la résistance à la perforation du sommet par certains objets. Ainsi II existe des règlements notamment américaine (ASTM WK20631) et chinoise (GB 9743-2007) basées sur la mesure de l'énergie nécessaire à la pénétration d'un indenteur à travers le sommet des pneumatiques. La baisse de la résistance à la perforation qu'amène l'utilisation de ces éléments de renforcement dans un pneumatique a pour conséquence que ces pneumatiques ne satisfont plus ces règlements. Ces pneumatiques deviennent alors impropres à la vente dans ces pays, à l'importation soit en tant que pièces détachées, soit montés sur des véhicules. Le passage de ce règlement est dès lors un enjeu commercial important pour tous les manufacturiers fabricants ou non dans ces pays.

Ces tests de pénétration sont appelés couramment «tests de breaking energy ». L'énergie à rupture du pneumatique dans les conditions de test imposées par le règlement est donc nommée « performance en breaking energy ». Les tests et la performance associée seront ainsi nommés dans la suite du document. Pour des pneumatiques de même type, c'est-à-dire de même usine, de même architecture, de même bande de roulement, les résultats sont dispersés de près de 10%, de sorte que la performance visée pour un pneumatique au moment de sa conception est la valeur prescrite par le règlement majorée de 10%.

Pour ce type de performance, la résistance à rupture des éléments de renforcement des couches de travail est considérée comme prépondérante comme le montre le brevet US8662128, via leur renforcement soit par l'augmentation de la densité, soit par l'augmentation du diamètre des fils élémentaires des éléments de renforcement des couches de travail. Cependant ces solutions sont contraires à l'objectif premier des inventeurs qui est le gain de masse et de matières premières.

Des pneumatiques comprenant des couches de travail et une couche de carcasse sont également décrits dans les documents FR3008998, FR3032149 et FR3041568.

### EXPOSE DE L'INVENTION

L'objectif principal de la présente invention est donc d'augmenter la performance en résistance à la pénétration d'un pneumatique pour véhicule dont les éléments de renforcement des couches de travail ont une faible masse, de manière à satisfaire les tests de breaking energy et d'améliorer sa résistance au roulement.

Cet objectif est atteint par un pneumatique pour véhicule tel que couvert par la revendication indépendante 1.

Les pneumatiques dont les couches de travail ont des résistances à la rupture linéiques au plus égales à 400 daN/cm préférentiellement au plus égales à 360 daN/cm, ne peuvent pas satisfaire les règlements de breaking energy sans une adaptation du sommet. Etant donné l'objectif de l'invention, il n'est pas envisageable d'augmenter la résistance à rupture linéique des couches de travail via la densité et le diamètre de leurs éléments de renforcement. Par ailleurs l'augmentation de la densité des éléments de renforcement diminue de fait l'épaisseur de mélange caoutchouteux entre deux éléments de renforcement adjacents sans diminuer leurs déformations en cisaillement. Ceci augmente le risque de fissuration des mélanges caoutchouteux des couches de travail.

La résistance à rupture linéique d'une couche Rc est définie par Rc=Fr^{∗}d, où Fr est la force à la rupture en traction des éléments de renforcement de la couche considérée, et d la densité des éléments de renforcement de la couche considérée, mesurée autour du point le plus radialement extérieur de la couche considérée.

Pour respecter les autres performances du pneumatique, il est nécessaire que les couches de travail aient des résistances à la rupture linéiques au moins égales à 300 daN/cm.

Selon les règles de conception usuelles de l'état de l'art pour la performance au test de breaking energy, le sommet du pneumatique se déforme autour de la tête de l'indenteur et subit principalement une flexion. Selon ces règles, étant donné les positions respectives des couches de travail qui sont plus proches de l'indenteur qui est appliqué sur la surface de roulement, et de la couche de carcasse, les contraintes de flexion sont plus élevées dans la couche de carcasse que dans la couche de travail. D'autre part les matériaux constituant leurs éléments de renforcement respectifs, textile pour la couche de carcasse et métallique pour les couches de travail, les couches de travail rompent à un niveau de sollicitation bien supérieur à celui de la couche de carcasse.

Par ailleurs, la couche de carcasse textile a un allongement à rupture de l'ordre de dix fois supérieur à celui des couches de travail, les couches de travail étaient considérées comme rompant donc les premières.

Ainsi les couches de travail apparaissent selon l'état de l'art comme l'élément essentiel de la performance en breaking energy et la couche de carcasse est considérée comme un paramètre n'influençant que peu la performance.

Une analyse plus poussée montre que la flexion n'est pas le paramètre majeur de la performance en breaking energy. La rupture du sommet est due à la mise sous tension des différentes couches à l'aplomb de la bande de roulement sur laquelle l'indenteur vient appuyer. En raison de la géométrie du pneumatique, les couches de travail étant d'une longueur, d'une valeur proche du périmètre extérieur du pneumatique, très supérieure à leur largeur, le rayon de courbure du sommet est au niveau de l'indenteur est plus petit dans la direction transverse que dans la direction circonférentielle. Ceci est vérifiable par test et par simulation. Ainsi la carcasse qui est orientée dans la direction transverse est plus sollicitée que les couches de travail.

Cet aspect est par ailleurs accentué par les sculptures actuelles dont les sillons longitudinaux favorisent la déformation dans la direction transversale.

Pour une sollicitation donnée, le composite qu'est le pneumatique se déforme jusqu'à une position d'équilibre. Les couches de travail se cisaillent de manière que leurs éléments de renforcement puissent reprendre efficacement les efforts appliqués. Pour le gonflage et la charge qui sont les sollicitations basiques d'un pneumatique, l'angle d'équilibre des éléments de renforcement des couches de travail est proche de 20°. L'angle d'équilibre des éléments de renforcement des couches de travail pour la déformation due au test de breaking energy, n'est pas obtenu pour un angle proche de 25° mais pour un angle au moins égal à 30° et pouvant atteindre 45°. Etant donné les rigidités respectives des différentes couches, la couche de carcasse va se déformer en tension et les couches de travail vont se déformer par le cisaillement des gommes jusqu'à que ce que les éléments de renforcement des couches de travail forment un angle avec la direction circonférentielle proche de l'angle d'équilibre.

Pour un sommet dont les couches de travail ont une résistance à la rupture linéique élevée, supérieure à 400 daN/cm, la couche de carcasse est un élément secondaire de la performance en breaking energy. Que la couche de carcasse ait rompu avant ou après les couches de travail pendant le test, le pneumatique atteint le niveau exigé par ce règlement en prenant la marge de sécurité de 10% mentionnée auparavant.

Dans le contexte de l'invention, les couches de travail ne permettent pas à elles seules d'atteindre le niveau exigé par le règlement. L'idée de l'invention est de créer une collaboration entre le dimensionnement de la couche de carcasse et celui des couches de travail pour atteindre cet objectif. Pour cela deux conditions sont nécessaires. La première condition est que la couche de carcasse puisse absorber l'allongement lorsque les couches de travail se cisaillent pour que leurs éléments de renforcement soient à l'angle d'équilibre de la déformation imposée par le test. La deuxième condition est que la résistance de rupture linéique de la couche de carcasse soit suffisamment élevée pour que l'énergie à rupture de la couche de carcasse en s'ajoutant à celle des couches de travail, permette d'atteindre le seuil du règlement plus 10%.

Cette collaboration est obtenue en augmentant la résistance à rupture linéique de la couche de carcasse en regard de la résistance à rupture linéique nécessaire pour la tenue à la pression. Cela implique une augmentation de la masse de la couche de carcasse qui va à l'encontre de l'objectif global recherché mais cette augmentation est faible en regard du gain de masse obtenu via utilisation de monofilaments dans les couches de travail.

De préférence, si le pneumatique a une largeur nominale au moins égale à 185 mm et au plus égal à 235 mm, la couche de carcasse a une résistance à rupture linéique Rcc au moins égale à 190 daN/cm.

Une solution préférée est que la couche de carcasse ait une résistance à rupture linéique Rcc au moins égale à 200 daN/cm, préférentiellement au moins égale à 220 daN/cm pour les pneumatique ayant une largeur nominale au moins égale à 135 mm, de préférence au moins égale à 185 mm et au plus égale à 235 mm et plus avantageusement encore au moins égale à 230 daN/cm pour les pneumatiques dont la largeur nominale est au moins égale à 245 mm. En effet, la largeur du pneumatique influence le rayon de courbure transversal appliqué notamment à la couche de carcasse lors de l'application de l'indenteur pendant le test et donc influence la sollicitation appliquée à la couche de carcasse. Par largeur nominale, on entend la largeur du pneumatique donnée par l'appellation dimensionnelle bien connue de l'homme de l'art..

Plus la résistance à rupture linéique de la couche de carcasse sera élevée, si tant est que la rupture des éléments de renforcement de la couche de carcasse survienne à un niveau d'allongement suffisant pour que la couche de carcasse collabore avec les couches de travail pour satisfaire le niveau de performance exigé par la règlement, plus l'apport d'énergie par la couche de carcasse sera élevée et donc plus le pneumatique passera aisément le niveau de performance exigé par le règlement. Le choix du concepteur pourra se faire entre plusieurs natures d'éléments de renforcement satisfaisants ces caractéristiques en fonction de leurs matériaux, du diamètre des éléments de renforcement de la couche de carcasse, de leurs coûts, de la facilité d'approvisionnement entre autres critères de choix possibles.

Avantageusement l'allongement à rupture Acc des éléments de renforcement de la couche de carcasse est au moins égal à 20% et plus avantageusement au moins égal à 25%.

Le niveau d'allongement à rupture Acc des éléments de renforcement de la couche de carcasse nécessaire pour une collaboration efficace des couches de travail et de la couche de carcasse dépend entre autres paramètres des modules de cisaillements des matériaux caoutchouteux entourant les éléments de renforcement des couches de travail et des angles que font les éléments de renforcement des couches de travail avec la direction circonférentielle à l'état neuf du pneumatique. Selon la valeur de ces paramètres, le concepteur de pneumatique pourra choisir le matériau le plus apte pour satisfaire le niveau de performance exigé par le règlement en fonction de l'allongement à rupture Acc des éléments de renforcement de la couche de carcasse nécessaire.

Avantageusement les éléments de renforcement textiles de la couche de carcasse sont en polytéréphtalate d'éthylène et notamment haute ténacité, en rayonne, une combinaison de polyamide aliphatique et de polyamide aromatique, ou une combinaison de polytéréphtalate d'éthylène et de polyamide aromatique, chacun de ces matériaux ayant des intérêts différents dans ce contexte de résistance et d'allongement à la rupture entre autres critères.

Il est avantageux que la résistance à la rupture linéique Rcc de la couche de carcasse soit au moins égale à 0.55 fois la résistance à la rupture linéique Rct de toutes les couches de travail, préférentiellement au moins égale à 0.6 fois, plus préférentiellement encore au moins égale à 0.65 fois notamment pour les pneumatiques dont la largeur sommet est au moins égal à 255 mm. Par largeur sommet, on entend la largeur sommet théorique donnée par l'appellation dimensionnelle.

Ainsi la résistance à la rupture linéique Rcc de la couche de carcasse est au moins égale à 0.55 fois le minimum des résistances à la rupture linéiques de toutes les couches de travail. Cela permet une contribution significative de la couche de carcasse à la performance de breaking energy.

Pour ce qui concerne les éléments de renforcement, les mesures de résistance à la rupture et d'allongement à la rupture sont effectuées en traction selon des procédures bien connues comme par exemple selon la norme ISO 6892 de 1984 pour les éléments de renforcement en acier.

Dans l'objectif de diminuer la masse du pneumatique, un optimum est atteint quand les éléments de renforcement des couches de travail sont des fils métalliques unitaires ou monofilaments. Les monofilaments permettent d'obtenir une couche de travail avec une épaisseur radiale plus faible qu'avec un câble. Cela permet de diminuer le volume de mélange caoutchouteux autour des câbles. Pour le type d'application visée, les monofilaments ont une section dont la plus petite dimension est au plus égale à 0.40 mm, préférentiellement au plus égal à 0.35 mm. Par ailleurs des monofilaments dont la plus petite dimension serait supérieure à 0.40 mm poseraient des problèmes de déformabilité et d'endurance.

Il est avantageux que chaque couche de travail comprenne des éléments de renforcement métalliques formant, avec une direction circonférentielle (XX') du pneumatique, un angle (A1, A2) au moins égal à 20° et au plus égal à 45°, préférentiellement au moins égal à 23° et au plus égal à 35°. Ces angles permettent un fonctionnement optimal du pneumatique sur des performances en endurance sommet, en comportement, en résistance au roulement.

Les éléments de renforcement des couches de travail peuvent être rectilignes ou non. Ils peuvent être préformés, de forme sinusoïdale, zigzag, ondulée ou suivant une spirale. Les éléments de renforcement métalliques des couches de travail sont en acier, de préférence en acier au carbone tel que ceux utilisés dans les câbles de type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance "SHT" (" Super High Tensile "), ultra-haute résistance "UHT" ("Ultra High Tensile ") ou "MT" ("Mega Tensile "). Les renforts en acier au carbone ont alors une résistance à la rupture en traction (Rm) qui est de préférence supérieure à 3000 MPa, plus préférentiellement supérieure à 3500 MPa. Leur allongement total à la rupture (At), somme de l'allongement élastique et de l'allongement plastique, est de préférence supérieur à 1.6%.

L'acier utilisé, qu'il s'agisse en particulier d'un acier au carbone ou d'un acier inoxydable, peut être lui-même revêtu d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que, lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les monofilaments peuvent avoir toute forme de section, sachant que les sections oblongues représentent un avantage sur les sections circulaires de même plus petite dimension. Une couche de travail constitué de monofilaments de sections oblongues correctement agencés peut pour une même résistance à la rupture avoir une épaisseur moindre qu'une couche de travail dont les éléments de renforcement ont des sections circulaire. Par ailleurs les inerties de flexion de monofilaments de sections oblongues sont supérieures aux inerties de flexion de monofilaments de sections circulaires et donc leur résistance au flambement sont supérieures, or la résistance au flambement est un critère important pour le dimensionnement des monofilaments. Pour une section circulaire, la plus petite dimension correspond au diamètre de la section. Pour garantir une résistance à rupture en fatigue des monofilaments et la tenue au cisaillement des mélanges caoutchouteux situés entre les filaments, la densité d'éléments de renforcement métalliques de chaque couche de travail est au moins égale à 100 monofilaments par dm et au plus égale à 200 monofilaments par dm, préférentiellement au moins égale à 115 monofilaments par dm et au plus égale à 170 monofilaments par dm. Par densité on entend le nombre moyen de monofilaments sur une largeur de couche de travail de 10 cm, cette largeur étant prise perpendiculairement à la direction des monofilaments de la couche de travail considérée. La distance entre des éléments de renforcement consécutifs peut être fixe ou variable. Pour les différents calculs de résistance à rupture linéique d'une couche, la densité est ramenée à l'unité adéquate, en éléments de renforcement par cm par exemple, pour assurer la cohérence des calculs.

La pose des éléments de renforcement en fabrication peut être effectuée par couche, par bandelette ou de façon unitaire.

Une solution préférée est que la densité d'éléments de renforcement textiles de la couche de carcasse, mesuré au voisinage du point le plus radialement extérieur de la couche de carcasse, est au moins égale à 40 éléments de renforcement par dm et préférentiellement au moins égale à 50 éléments de renforcement par dm. La performance sur le test de breaking energy étant lié à la densité des éléments de renforcement de la couche de carcasse dans la partie radialement à l'aplomb des couches de travail, la densité des éléments de renforcement de la couche de carcasse est mesurée dans cette partie de la couche de carcasse et non au niveau des bourrelets comme il est possible de le faire pour certaines applications. L'invention est liée à la performance du sommet tant pour la masse, la résistance au roulement et le test de breaking energy. La mesure de la densité des éléments de renforcement de la couche de carcasse s'effectue donc également au niveau du sommet d'une manière similaire que pour les couches de travail.

Préférentiellement les éléments de renforcement textiles de la couche de carcasse sont constitués de filés de filaments élémentaires soumis à une torsion, la torsion des filés de filaments élémentaires constitutifs des éléments de renforcement textiles de la couche de carcasse est au moins égale à 185 t/m et au plus égale à 420t/m.

On rappellera simplement ici que ces retors ou câblés textiles, traditionnellement à double torsion (Ti, T2), sont préparés par un procédé dit de retordage (« twisting ») dans lequel :
- au cours d'une première étape, chaque filé ou fibre multifilamentaire (en anglais « yarn ») constitutive du câblé final est tout d'abord individuellement tordue sur elle-même (selon une torsion initiale Ti) dans une direction donnée DI (respectivement sens S ou Z), pour former un brin (en anglais « strand ») dans lequel les filaments élémentaires se voient imposés une déformation en hélice autour de l'axe de fibre (ou axe du brin) ;
- puis, au cours d'une seconde étape, plusieurs brins, généralement au nombre de deux, trois ou quatre, de natures identiques ou différentes dans le cas de câblés dits hybrides ou composites, sont ensuite retordus ensemble selon une torsion finale T2 (pouvant être égale à ou différente de Ti) en direction opposée D2 (respectivement sens Z ou S, selon une nomenclature reconnue désignant l'orientation des spires selon la barre transversale d'un S ou d'un Z), pour l'obtention du câblé (en anglais « cord ») ou assemblage final à plusieurs brins.

Le rôle du retordage est d'adapter les propriétés du matériau afin de créer la cohésion transversale du renfort, d'accroître sa tenue en fatigue et aussi d'améliorer l'adhésion avec la matrice renforcée. De tels câblés textiles, leurs constructions et procédés de fabrication sont bien connus de l'homme du métier. Ils ont été décrits en détail dans un grand nombre de documents, pour ne citer que quelques exemples dans les documents brevet EP 021 485, EP 220 642, EP225 391, EP 335 588, EP 467 585, US 3 419 060, US 3 977 172, US 4 155 394, US 5 558 144, WO97/06294 ou EP 848 767, ou plus récemment WO2012/104279, WO2012/146612, WO2014/057082.

Pour pouvoir renforcer des articles en caoutchouc tels que des pneumatiques, la résistance à la fatigue (endurance en extension, flexion, compression) de ces câblés textiles est primordiale. On sait que de manière générale, pour un matériau donné, elle est d'autant plus élevée que les torsions employées sont importantes, mais qu'en contrepartie, leur force à la rupture en extension (appelée ténacité lorsqu'elle est ramenée à l'unité de poids) diminue inexorablement lorsqu'augmente la torsion, ce qui bien entendu est pénalisant du point de vue du renforcement et de la performance en breaking energy. Aussi, les concepteurs de câblés textiles, comme les fabricants de pneumatiques, sont en permanence à la recherche de câblés textiles dont les propriétés mécaniques, particulièrement la force rupture et la ténacité, pour un matériau et une torsion donnés, pourraient être améliorées. C'est cet équilibre qui est ici recherché afin de satisfaire l'ensemble des performances du pneumatique dont la performance en breaking energy.

Il est avantageux que l'armature de sommet comprenne au moins une couche de frettage et que la couche de frettage soit radialement extérieure à l'armature de travail pour une bonne tenue de cette dernière en endurance. La couche de frettage comprend des éléments de renforcement faisant un angle avec la direction circonférentielle au plus égal à 8°

Préférentiellement les éléments de renforcement de la au moins une couche de frettage sont en textile de préférence de type polyamide aliphatique, polyamide aromatique, combinaison de polyamide aliphatique et de polyamide aromatique, polytéréphtalate d'éthylène ou rayonne car les matériaux textiles sont particulièrement adaptés à ce type d'usage en raison de leur faible masse et de leur rigidité élevée. La distance entre des éléments de renforcement consécutifs de la couche de frettage ou pas peut être fixe ou variable. La pose des éléments de renforcement en fabrication peut être effectuée par couche, par bandelette ou de façon unitaire.

### DESCRIPTION DES DESSINS

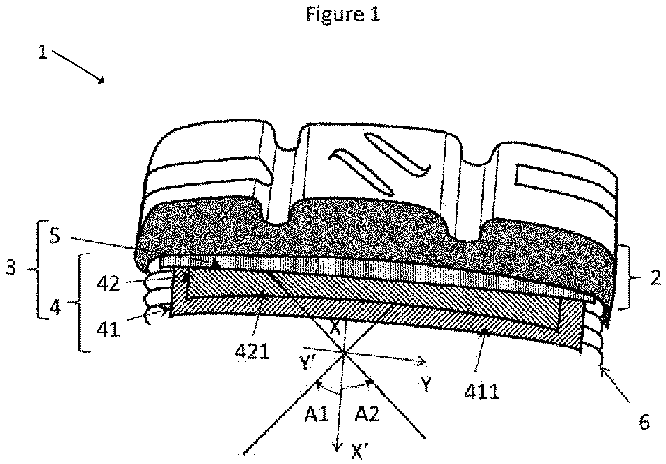

Les caractéristiques et autres avantages de l'invention seront mieux compris à l'aide de la figure 1 représentant une coupe méridienne du sommet d'un pneumatique selon l'invention.

Le pneumatique comporte une bande de roulement 2 destinée à entrer en contact avec un sol par l'intermédiaire d'une surface de roulement 21. Le pneumatique comprend en outre une armature de sommet 3 radialement intérieure à la bande de roulement 2, et comprenant une armature de travail 4 et une armature de frettage 5. L'armature de travail comprend deux couches de travail 41 et 42 comprenant chacune des éléments de renforcement parallèles entre eux 411, 421, formant respectivement avec une direction circonférentielle (XX') du pneumatique, un angle orienté A1, A2 au moins égal à 20° et au plus égal à 50° en valeur absolue et de signe opposé d'une couche à la suivante. Le pneumatique comprend également une unique couche de carcasse 6 radialement intérieure à l'armature de sommet.

Les inventeurs ont réalisé des calculs sur la base de l'invention pour un pneumatique de dimension 225/55 R16, d'une largeur nominale de 225 mm, comprenant deux couches de travail et une couche de carcasse.

Le pneumatique témoin TA d'une conception classique hors invention comprenant :
- deux couches de travail comprenant des éléments de renforcement constitués par des câbles de deux fils de 0,3 mm de diamètre d'une densité de 95 éléments de renforcement par décimètre pour une résistance à la rupture linéique Rct égale à 420 daN/cm,
- une couche de carcasse en polytéréphtalate d'éthylène comprenant 2 torons de 220 tex ayant une densité de 63 éléments de renforcement par dm pour une résistance à la rupture linéique de 180 daN/cm, les éléments de renforcement ayant un allongement à rupture de 19%.

Cette conception permet d'avoir une performance en test de breaking energy suffisante de plus de 680 J contre une limite admissible par la norme de 588 J.

Le besoin de gains de masse et de résistance au roulement a amené les inventeurs à utiliser des couches de travail comprenant des monofilaments en acier.

Ils conçoivent, suivant l'état de la technique, un pneumatique TA2 dont la couche de carcasse reste inchangée. Le gain en masse pour cette conception est alors de 200 g et l'amélioration de la résistance au roulement de près de 0.15 Kg/t. Ce pneumatique hors de l'invention comprend :
- deux couches de travail comprenant des éléments de renforcement constitués par des monofilaments en acier HT (High Tensile) de diamètre 0.32 mm, répartis selon une densité de 143 monofilaments au décimètre pour une résistance à la rupture linéique Rct égale à 350 daN/cm.

En revanche, ce pneumatique TA2 n'a pas une performance en test de breaking energy satisfaisante à 610 j soit à peine 3% au-dessus de la valeur réglementaire, ce qui restreint considérablement la taille des marchés sur lesquels il pourrait être vendu.

L'invention consiste à modifier les éléments de renforcement de la couche de carcasse pour concevoir le pneumatique A. Le pneumatique A, selon l'invention, comprend :
- deux couches de travail, identiques à celles de TA2 car innovantes permettant le gain de masse et résistance au roulement, comprenant des éléments de renforcement constitués par des monofilaments en acier HT (High Tensile) de diamètre 0.32 mm, répartis selon une densité de 143 monofilaments au décimètre pour une résistance à la rupture linéique Rct égale à 350 daN/cm,
- une couche de carcasse en en polytéréphtalate d'éthylène comprenant 2 torons de 344 tex ayant une densité de 53 éléments de renforcement par dm pour une résistance à la rupture linéique de 214 daN/cm, les éléments de renforcement ayant un allongement à rupture de 19%.

Le gain en masse pour cette conception est alors de 200 g et l'amélioration de la résistance au roulement de près de 0.15 Kg/t par rapport au pneumatique TA initial et sa performance en breaking energy est de 960 J soit supérieure à la valeur imposée par le règlement.

Pour l'ensemble des pneumatiques décrits, les angles A1 et A2 des éléments de renforcement des couches de travail sont respectivement égaux à +25° et -25°.

Les inventeurs ont réalisé une deuxième série de tests sur la base de l'invention pour un pneumatique de dimension 255/55 R18, d'une largeur nominale de 255 mm, comprenant deux couches de travail et une couche de carcasse.

Le pneumatique témoin TB d'une conception classique hors invention comprenant :
- deux couches de travail comprenant des éléments de renforcement constitués par des câbles de quatre fils de 0,26 mm de diamètre d'une densité de 80 éléments de renforcement par décimètre pour une résistance à la rupture linéique Rct égale à 480 daN/cm,
- une couche de carcasse en polytéréphtalate d'éthylène comprenant 2 torons de 334 tex ayant une densité de 52 éléments de renforcement par dm pour une résistance à la rupture linéique de 212 daN/cm, les éléments de renforcement ayant un allongement à rupture de 19%.

Cette conception permet d'avoir une performance en test de breaking energy suffisante de plus de 790 J contre une limite admissible par le règlement de 588 J.

Le besoin de gains de masse et de résistance au roulement a amené les inventeurs à utiliser des couches de travail comprenant des monofilaments en acier.

Ils conçoivent, suivant l'état de la technique, un pneumatique TB2 dont la couche de carcasse reste inchangée. Le gain en masse pour cette conception est alors de 650 g et l'amélioration de la résistance au roulement de près de 0.15 kg/t. Ce pneumatique hors de l'invention comprend :
- deux couches de travail comprenant des éléments de renforcement constitués par des monofilaments en acier HT (High Tensile) de diamètre 0.32 mm, répartis selon une densité de 143 monofilaments au décimètre pour une résistance à la rupture linéique Rct égale à 350 daN/cm,

En revanche, ce pneumatique TB2 n'a pas une performance en test de breaking energy satisfaisante à 500 j soit en dessous de la valeur réglementaire, ce qui restreint considérablement la taille des marchés sur lesquels il pourrait être vendu.

L'invention consiste à modifier les éléments de renforcement de la couche de carcasse pour concevoir le pneumatique B. Le pneumatique B, selon l'invention, comprend :
- deux couches de travail comprenant des éléments de renforcement constitués par des monofilaments en acier HT (High Tensile) de diamètre 0.32 mm, répartis selon une densité de 143 monofilaments au décimètre pour une résistance à la rupture linéique Rct égale à 350 daN/cm,
- une couche de carcasse en nylon comprenant 3 torons de 210 tex ayant une densité de 52 éléments de renforcement par dm pour une résistance à la rupture linéique de 234 daN/cm, les éléments de renforcement ayant un allongement à rupture de 27%.

Le gain en masse pour cette conception est alors de 650 g et l'amélioration de la résistance au roulement de près de 0.15 kg/t par rapport au pneumatique TB initial et sa performance en breaking energy est de 937 J soit très supérieure à la valeur imposée par le règlement.

Pour l'ensemble des pneumatiques décrits, les angles A1 et A2 des éléments de renforcement des couches de travail sont respectivement égaux à +25° et -25°.

## Revendications

1. Pneumatique (1) pour véhicule comprenant :
• une bande de roulement (2),
• une armature de sommet (3) radialement intérieure à la bande de roulement (2) et comprenant une armature de travail (4),
• l'armature de travail (4) comprenant au moins deux couches de travail (41, 42), chaque couche de travail (41,42) ayant une résistance à rupture linéique Rct, chaque couche de travail (41, 42) comprenant des éléments de renforcement métalliques (411, 421),
• les éléments de renforcement métalliques (411, 421) des couches de travail (41, 42) comprenant des fils métalliques unitaires ou monofilaments,
• une unique couche de carcasse (6), radialement intérieure à l'armature de sommet (3) et reliant entre eux deux bourrelets destinés à entrer en contact avec une jante et comprenant des éléments de renforcement textiles, la couche de carcasse (6) ayant une résistance à rupture linéique Rcc,
• la résistance à rupture linéique d'une couche Rc étant définie par Rc=Fr^{∗}d, où Fr est la force à la rupture en traction des éléments de renforcement de la couche considérée, et d la densité des éléments de renforcement de la couche considérée, mesurée autour du point le plus radialement extérieur de la couche considérée et correspondant au nombre moyen des éléments de renforcement sur une largeur de la couche considérée de 10 cm, cette largeur étant prise perpendiculairement à la direction des éléments de renforcement de la couche considérée,
**caractérisé en ce que** la résistance à rupture linéique Rct de chaque couche de travail (41, 42) est au moins égale à 300 daN/cm et au plus égale à 400 daN/cm, **en ce que** les éléments de renforcement textiles de la couche de carcasse (6) ont un allongement à rupture Acc au moins égal à 15%
**et en ce que** si le pneumatique (1) a une largeur nominale au moins égale à 135 mm et au plus égale à 235 mm, la couche de carcasse (6) a une résistance à rupture linéique Rcc au moins égale à 190 daN/cm et si le pneumatique (1) a une largeur nominale au moins égale à 245 mm, la couche de carcasse (6) a une résistance à rupture linéique Rcc au moins égale à 220 daN/cm, les mesures de résistance à la rupture et d'allongement à rupture étant effectuées en traction selon la norme ISO 6892 de 1984 pour les éléments de renforcement en acier.

2. Pneumatique (1) selon la revendication 1 **dans lequel** les éléments de renforcement textiles de la couche de carcasse (6) ont un allongement à rupture Acc au moins égale à 20%.

3. Pneumatique (1) selon l'une quelconque des revendications 1 ou 2, les éléments de renforcement textiles de la couche de carcasse (6) étant constitués de filés de filaments élémentaires soumis à une torsion, **dans lequel** la torsion des filés de filaments élémentaires constitutifs des éléments de renforcement textiles de la couche de carcasse (6) est au moins égale à 185 t/m et au plus égale à 420t/m.

4. Pneumatique (1) selon l'une quelconque des revendications 1 à 3 **dans lequel** les éléments de renforcement textiles de la couche de carcasse (6) sont en polytéréphtalate d'éthylène, rayonne, une combinaison de polyamide aliphatique et de polyamide aromatique, ou une combinaison de polytéréphtalate d'éthylène et de polyamide aromatique.

5. Pneumatique (1) selon l'une quelconque des revendications 1 à 4 **dans lequel** les éléments de renforcement métalliques (411, 421) d'au moins une couche de travail (41, 42) sont constitués par des fils métalliques unitaires ou monofilaments ayant une section dont la plus petite dimension est au plus égale à 0.40 mm, préférentiellement au plus égal à 0.35 mm.

6. Pneumatique (1) selon l'une quelconque des revendications 1 à 5 **dans lequel** chaque couche de travail (41, 42) comprend des éléments de renforcement métalliques (411, 421), formant, avec une direction circonférentielle (XX') du pneumatique (1), un angle (A1, A2) au moins égal à 20° et au plus égal à 45°.

7. Pneumatique (1) selon l'une quelconque des revendications 1 à 6 **dans lequel** chaque couche de travail (41, 42) comprend des éléments de renforcement métalliques (411, 421), formant, avec une direction circonférentielle (XX') du pneumatique (1), un angle (A1, A2) au moins égal à 23° et au plus égal à 35°.

8. Pneumatique (1) selon l'une quelconque des revendications 1 à 7 **dans lequel** les éléments de renforcement métalliques (411, 421) des couches de travail (41, 42) sont en acier au carbone.

9. Pneumatique (1) selon l'une quelconque des revendications 1 à 8 **dans lequel** la densité d'éléments de renforcement métalliques (411, 421) de chaque couche de travail (41, 42), est au moins égale à 100 monofilaments par dm et au plus égale à 200 monofilaments par dm, préférentiellement au moins égale à 115 monofilaments par dm et au plus égale à 170 monofilaments par dm.

10. Pneumatique (1) selon l'une quelconque des revendications 1 à 9 **dans lequel** la densité d'éléments de renforcement textiles de la couche de carcasse (6), mesurée au voisinage du point le plus radialement extérieur de la couche de carcasse (6), est au moins égale à 40 éléments de renforcement textiles par dm et préférentiellement au moins égale à 50 éléments de renforcement textiles par dm.

11. Pneumatique (1) selon l'une quelconque des revendications 1 à 10, comprenant au moins une couche de frettage (5) **dans lequel** les éléments de renforcement de la au moins une couche de frettage (5) sont en textile, de préférence de type polytéréphtalate d'éthylène, polyamide aliphatique, combinaison de polyamide aliphatique et de polyamide aromatique, ou combinaison de polytéréphtalate d'éthylène et de polyamide aromatique.

## Patentansprüche

1. Luftreifen (1) für ein Fahrzeug, der enthält:
• einen Laufstreifen (2),
• eine Scheitelbewehrung (3) radial innen bezüglich des Laufstreifens (2) und eine Arbeitsbewehrung (4) enthaltend,
• wobei die Arbeitsbewehrung (4) mindestens zwei Arbeitsschichten (41, 42) enthält, wobei jede Arbeitsschicht (41, 42) eine längenbezogene Reißfestigkeit Rct hat, wobei jede Arbeitsschicht (41, 42) metallische Verstärkungselemente (411, 421) enthält,
• wobei die metallischen Verstärkungselemente (411, 421) der Arbeitsschichten (41, 42) Einzelmetalldrähte oder Monofilamente enthalten,
• eine einzige Karkassenschicht (6), radial innen bezüglich der Scheitelbewehrung (3) und zwei Wülste miteinander verbindend, die dazu bestimmt sind, mit einer Felge in Kontakt zu kommen, und die textile Verstärkungselemente enthält, wobei die Karkassenschicht (6) eine längenbezogene Reißfestigkeit Rcc hat,
• wobei die längenbezogene Reißfestigkeit einer Schicht Rc durch Rc=Fr^{∗}d definiert wird, wobei Fr die Zugreißkraft der Verstärkungselemente der betreffenden Schicht und d die Dichte der Verstärkungselemente der betreffenden Schicht ist, gemessen um den radial am weitesten außen liegenden Punkt der betreffenden Schicht herum und entsprechend der mittleren Anzahl der Verstärkungselemente über eine Breite der betreffenden Schicht von 10 cm, wobei diese Breite lotrecht zur Richtung der Verstärkungselemente der betreffenden Schicht genommen wird,
**dadurch gekennzeichnet, dass** die längenbezogene Reißfestigkeit Rct jeder Arbeitsschicht (41, 42) mindestens gleich 300 daN/cm und höchstens gleich 400 daN/cm ist,
dass die textilen Verstärkungselemente der Karkassenschicht (6) eine Reißdehnung Acc mindestens gleich 15% haben,
und dass, wenn der Luftreifen (1) eine Nennbreite mindestens gleich 135 mm und höchstens gleich 235 mm hat, die Karkassenschicht (6) eine längenbezogene Reißfestigkeit Rcc mindestens gleich 190 daN/cm hat, und wenn der Luftreifen (1) eine Nennbreite mindestens gleich 245 mm hat, die Karkassenschicht (6) eine längenbezogene Reißfestigkeit Rcc mindestens gleich 220 daN/cm hat, wobei die Reißfestigkeits- und Reißdehnungsmessungen unter Zug gemäß der Norm ISO 6892 von 1984 für die Verstärkungselemente aus Stahl ausgeführt werden.

2. Luftreifen (1) nach Anspruch 1, wobei die textilen Verstärkungselemente der Karkassenschicht (6) eine Reißdehnung Acc mindestens gleich 20% haben.

3. Luftreifen (1) nach einem der Ansprüche 1 oder 2, wobei die textilen Verstärkungselemente der Karkassenschicht (6) aus Fäden von Elementarfilamenten bestehen, die einer Torsion unterzogen werden, wobei die Torsion der Fäden von Elementarfilamenten, die die textilen Verstärkungselemente der Karkassenschicht (6) bilden, mindestens gleich 185 t/m und höchstens gleich 420 t/m ist.

4. Luftreifen (1) nach einem der Ansprüche 1 bis 3, wobei die textilen Verstärkungselemente der Karkassenschicht (6) aus Polyethylenterephthalat, Rayon, einer Kombination von aliphatischem Polyamid und aromatischem Polyamid, oder einer Kombination von Polyethylenterephthalat und aromatischem Polyamid sind.

5. Luftreifen (1) nach einem der Ansprüche 1 bis 4, wobei die metallischen Verstärkungselemente (411, 421) mindestens einer Arbeitsschicht (41, 42) aus Einzelmetalldrähten oder Monofilamenten bestehen, die einen Querschnitt haben, dessen kleinste Abmessung höchstens gleich 0,40 mm, vorzugsweise höchstens gleich 0,35 mm ist.

6. Luftreifen (1) nach einem der Ansprüche 1 bis 5, wobei jede Arbeitsschicht (41, 42) metallische Verstärkungselemente (411, 421) enthält, die mit einer Umfangsrichtung (XX') des Luftreifens (1) einen Winkel (A1, A2) mindestens gleich 20° und höchstens gleich 45° bilden.

7. Luftreifen (1) nach einem der Ansprüche 1 bis 6, wobei jede Arbeitsschicht (41, 42) metallische Verstärkungselemente (411, 421) enthält, die mit einer Umfangsrichtung (XX') des Luftreifens (1) einen Winkel (A1, A2) mindestens gleich 23° und höchstens gleich 35° bilden.

8. Luftreifen (1) nach einem der Ansprüche 1 bis 7, wobei die metallischen Verstärkungselemente (411, 421) der Arbeitsschichten (41, 42) aus Kohlenstoffstahl sind.

9. Luftreifen (1) nach einem der Ansprüche 1 bis 8, wobei die Dichte metallischer Verstärkungselemente (411, 421) jeder Arbeitsschicht (41, 42) mindestens gleich 100 Monofilamente pro dm und höchstens gleich 200 Monofilamente pro dm, vorzugsweise mindestens gleich 115 Monofilamente pro dm und höchstens gleich 170 Monofilamente pro dm ist.

10. Luftreifen (1) nach einem der Ansprüche 1 bis 9, wobei die Dichte von textilen Verstärkungselementen der Karkassenschicht (6), gemessen in der Nähe des radial am weitesten außen befindlichen Punkts der Karkassenschicht (6), mindestens gleich 40 textile Verstärkungselemente pro dm und vorzugsweise mindestens gleich 50 textile Verstärkungselemente pro dm ist.

11. Luftreifen (1) nach einem der Ansprüche 1 bis 10, der mindestens eine Bandagierungsschicht (5) enthält, wobei die Verstärkungselemente der mindestens einen Bandagierungsschicht (5) aus Textil sind, vorzugsweise der Art Polyethylenterephthalat, aliphatisches Polyamid, Kombination von aliphatischem Polyamid und aromatischem Polyamid, oder Kombination von Polyethylenterephthalat und aromatischem Polyamid.

## Claims

1. Tyre (1) for a vehicle, comprising:
• a tread (2),
• a crown reinforcement (3) radially on the inside of the tread (2) and comprising a working reinforcement (4),
• the working reinforcement (4) comprising at least two working layers (41, 42), each working layer (41, 42) having a linear breaking strength Rct, each working layer (41, 42) comprising metal reinforcing elements (411, 421),
• the metal reinforcing elements (411, 421) of the working layers (41, 42) comprising individual metal threads or monofilaments,
• a single carcass layer (6) that is radially on the inside of the crown reinforcement (3) and connects together two beads that are intended to come into contact with a rim and comprise textile reinforcing elements, the carcass layer (6) having a linear breaking strength Rcc,
the linear breaking strength of a layer Rc being defined by Rc=Fr^{∗}d, where Fr is the tensile breaking force of the reinforcing elements of the layer in question, and d is the density of the reinforcing elements of the layer in question, measured around the radially outermost point of the layer in question and corresponding to the mean number of reinforcing elements over a 10 cm width of the layer in question, this width being measured perpendicularly to the direction of the reinforcing elements of the layer in question. **characterized in that** the linear breaking strength Rct of each working layer (41, 42) is at least equal to 300 daN/cm and at most equal to 400 daN/cm,
**in that** the textile reinforcing elements of the carcass layer (6) have an elongation at break Acc at least equal to 15%,
**and in that**, if the tyre (1) has a nominal width at least equal to 135 mm and at most equal to 235 mm, of the carcass layer (6) has a linear breaking strength Rcc at least equal to 190 daN/cm, and if the tyre (1) has a nominal width at least equal to 245 mm, the carcass layer (6) has a linear breaking strength Rcc at least equal to 220 daN/cm, the breaking strength and elongation at break measurements being carried out according to the standard ISO 6892 of 1984 for steel reinforcing elements.

2. Tyre (1) according to Claim 1, **wherein** the textile reinforcing elements of the carcass layer (6) have an elongation at break Acc at least equal to 20%.

3. Tyre (1) according to any either of Claims 1 and 2, the textile reinforcing elements of the carcass layer (6) being made up of spun elementary filaments subjected to torsion, **wherein** the torsion in the constituent spun elementary filaments of the textile reinforcing elements of the carcass layer (6) is at least equal to 185 t/m and at most equal to 420 t/m.

4. Tyre (1) according to any one of Claims 1 to 3, **wherein** the textile reinforcing elements of the carcass layer (6) are made of polyethylene terephthalate, rayon, a combination of aliphatic polyamide and aromatic polyamide, or a combination of polyethylene terephthalate and aromatic polyamide.

5. Tyre (1) according to any one of Claims 1 to 4, **wherein** the metal reinforcing elements (411, 421) of at least one working layer (41, 42) are made up of individual metal threads or monofilaments having a section of which the smallest dimension is at most equal to 0.40 mm, preferably at most equal to 0.35 mm.

6. Tyre (1) according to any one of Claims 1 to 5, **wherein** each working layer (41, 42) comprises metal reinforcing elements (411, 421) that form, with a circumferential direction (XX') of the tyre (1), an angle (A1, A2) at least equal to 20° and at most equal to 45°.

7. Tyre (1) according to any one of Claims 1 to 6, **wherein** each working layer (41, 42) comprises metal reinforcing elements (411, 421) that form, with a circumferential direction (XX') of the tyre (1), an angle (A1, A2) at least equal to 23° and at most equal to 35°.

8. Tyre (1) according to any one of Claims 1 to 7, **wherein** the metal reinforcing elements (411, 421) of the working layers (41, 42) are made of carbon steel.

9. Tyre (1) according to any one of Claims 1 to 8, **wherein** the density of metal reinforcing elements (411, 412) in each working layer (41, 42) is at least equal to 100 monofilaments per dm and at most equal to 200 monofilaments per dm, preferably at least equal to 115 monofilaments per dm and at most equal to 170 monofilaments per dm.

10. Tyre (1) according to any one of Claims 1 to 9, **wherein** the density of textile reinforcing elements in the carcass layer (6), measured in the vicinity of the radially outermost point of the carcass layer (6), is at least equal to 40 textile reinforcing elements per dm and preferably at least equal to 50 textile reinforcing elements per dm.

11. Tyre (1) according to any one of Claims 1 to 10, comprising at least one hooping layer (5), **wherein** the reinforcing elements in the at least one hooping layer (5) are made of textile, preferably of the polyethylene terephthalate, aliphatic polyamide, combination of aliphatic polyamide and aromatic polyamide, or combination of polyethylene terephthalate and aromatic polyamide type.
